# EUROPÄISCHE PATENTSCHRIFT

(11) **EP 0 308 686 B1**
(45) Veröffentlichungstag und Bekanntmachung des Hinweises auf die Patenterteilung: **10.03.1993**
(21) Anmeldenummer: 88114027.1
(22) Anmeldetag: 27.08.1988
(51) Int. Cl.: G02B 5/04, G01C 11/02, G02B 26/10

(54) **Abtastprisma**
Scanning prism
Prisme de balayage

(30) Priorität: 23.09.1987 DE 3732068
(43) Veröffentlichungstag der Anmeldung: 29.03.1989
(73) Patentinhaber: Deutsche Aerospace AG, 81663 München (DE)
(72) Erfinder: Hofmann, Otto, Dr., D-8011 Kirchstockach (DE)

(56) Entgegenhaltungen:
- EP-A- 0 027 168
- EP-A- 0 052 189
- EP-A- 0 095 660
- DE-A- 2 105 079
- FR-A- 2 135 181
- FR-A- 2 432 724
- FR-A- 2 582 112
- US-A- 3 320 019
- US-A- 4 204 122

## Beschreibung

Für die Bestimmung der Orientierungsparameter eines von einem Flugkörper oder einem anderen bewegten Objekt getragenen Dreizeilen-Abtaster besteht der Bedarf nach Erzeugung von Abtastspuren, die einen gewissen Winkel zum Flugweg bilden. In den deutschen Patentschriften DE 29 40 871 C 2, DE 30 43 577 C 2 und DE 32 19 032 C 2 werden Vorrichtungen und Verfahren beschrieben, die es ermöglichen, mit optisch-elektronischen Abtastern unter Benützung von drei Halbleitersensorzeilen die Orientierungsparameter der Kamera und das Geländemodell des abgetasteten Geländes zu bestimmen.

In der deutschen Patentanmeldung P 35 17 671.7 wird dieses Verfahren auf optisch-mechanische Abtaster ausgedehnt und angewendet.

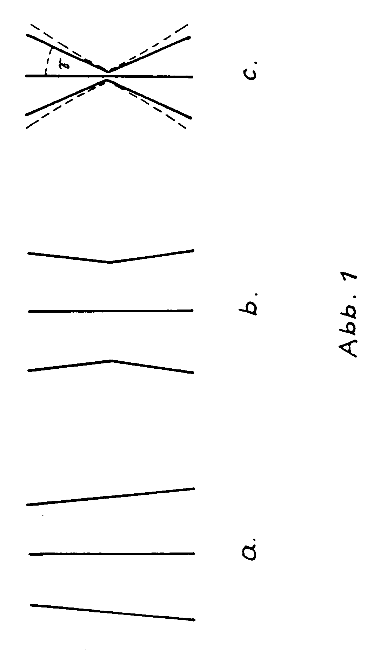

In der o.g. Patentschrift 30 43 577 und darauf aufbauenden Untersuchungen und Veröffentlichungen (z.B. Hofmann, O.: Dynamische Photogrammetrie, Heft 3, Bildmessung und Luftbildwesen, 1986) wird gezeigt, daß die winklige Anordnung der beiden äußeren, in der Bildebene eines Objektivs angeordneten Sensorzeilen und die von ihnen erzeugten winkligen Abtastspuren eine größere Stabilität und Genauigkeit der Modellberechnung (Orientierungsparameter und Geländepunkte) erreichen als parallele Anordnungen (Abb. 1). In Abb. 1a verlaufen die äußeren Sensorzeilen bzw. ihre Spuren im Gelände trapezförmig, in der Abb. 1b schwach pfeilförmig. Im extremen Fall des Tieffluges hat es sich aus Genauigkeits- und Stabilitätsgründen als günstig erwiesen, diese pfeilförmigen Abtastspuren der äußeren Sensoren so weit zu verändern, daß die Pfeilspitzen etwa auf die Mitte der mittleren Sensorzeile bzw. Abtastspuren weisen und die Pfielwinkel auf etwa 30° vergrößert werden (Abb. 1c). Es ist nicht erforderlich, daß die durch die Sensoren erzeugten Abtastspuren exakt gerade verlaufen, sie können z.B. schwach hyperbel-ähnlich gekrümmt sein, wie das die punktierten Linien in Abb. 1c andeuten. In der o.g. Patentanmeldung P 35 17 671.7 werden diese äußeren Abtastspuren durch Drehspiegel mit zur Drehachse geneigten Spiegelnormalen erzeugt. Dabei entstehen zwangsläufig hyperbel-ähnliche Abtastspuren.

Die Abtastung mit Drehspiegeln führt aber vor allem bei großen Bildwinkeln bis 180° zu unhandlich großen Spiegelflächen, Gerätedimensionen und hohen Rotationsmomenten. Nachfolgend wird beschrieben, wie mit einem Drehprisma besonderer Ausbildung diese Nachteile umgangen werden können.

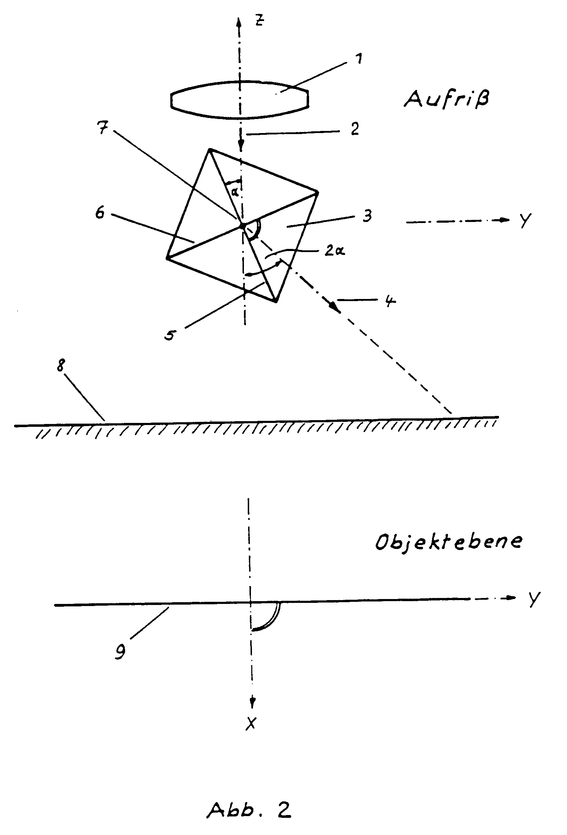

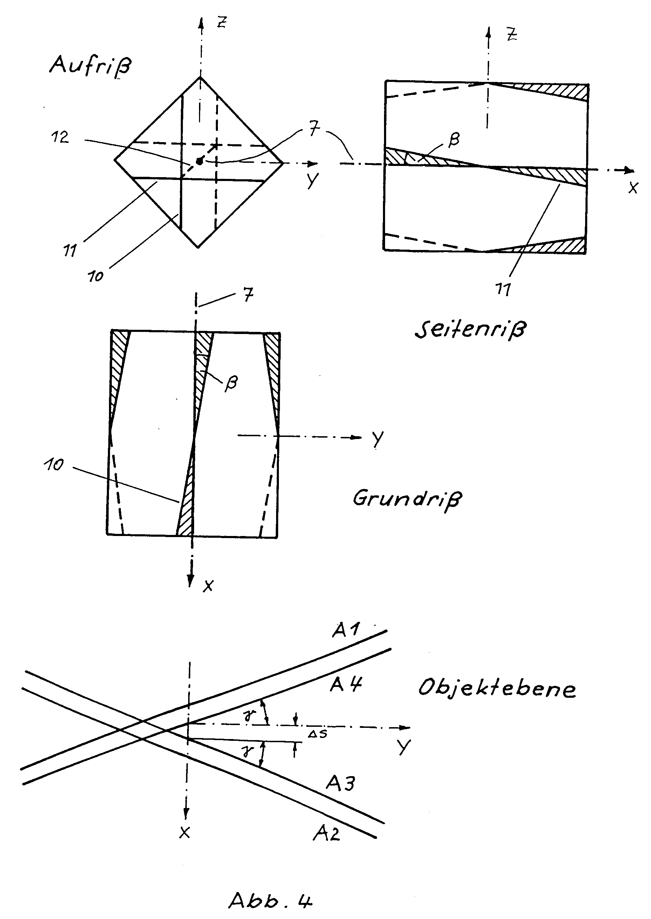

Es ist bekannt, daß mit einem zwei- oder vierteiligen Abtastprisma (siehe deutsche Patentanmeldung P 21 21 918.1, Abtastprisma), das vor einem Objektiv (1) angeordnet ist, bei einer Umdrehung des Prismas (3) um die Achse (7) zwei bzw. vier Abtastungen erzeugt werden, je nachdem ob das Prisma zwei- oder vierteilig ausgebildet ist (Abb. 2). Dabei wird das unter dem Winkel α auf das Prisma treffende Strahlenbündel (2) jeweils um den doppelten Betrag 2α in Strahlrichtung (4) abgelenkt. Die auf der Objektebene (8) erzeugten Abtastspuren (9) des Strahlenbündels (4) verlaufen rechtwinklig zur Rotationsachse (7) des Abtastprismas (x-Richtung des Abtasters), wobei die Objektebene (8) parallel zur Rotationsachse (7) des Abtastprismas und normal zur optischen Achse (2) des Objektivs (1) liegt. Um Abtastspuren zu erzeugen, die unter einem bestimmten Winkel γ zur X-Achse des Abtasters bzw. zur Flugrichtung verlaufen (siehe Abb. 1c, 3, 4), werden die Reflexionsflächen (5) und (6) verändert. Bei der bisher bekannten Ausführungsform stehen diese Reflexionsflächen (5) und (6) rechtwinklig aufeinander und ihre Schnittlinie liegt in der Rotationsachse (7) des Abtastprismas.

Erfindungsgemäß werden diese Reflexionsflächen unter einem bestimmten Winkel β ungleich Null und 90° gegen die Drehachse (7) des Abtastprismas geneigt.

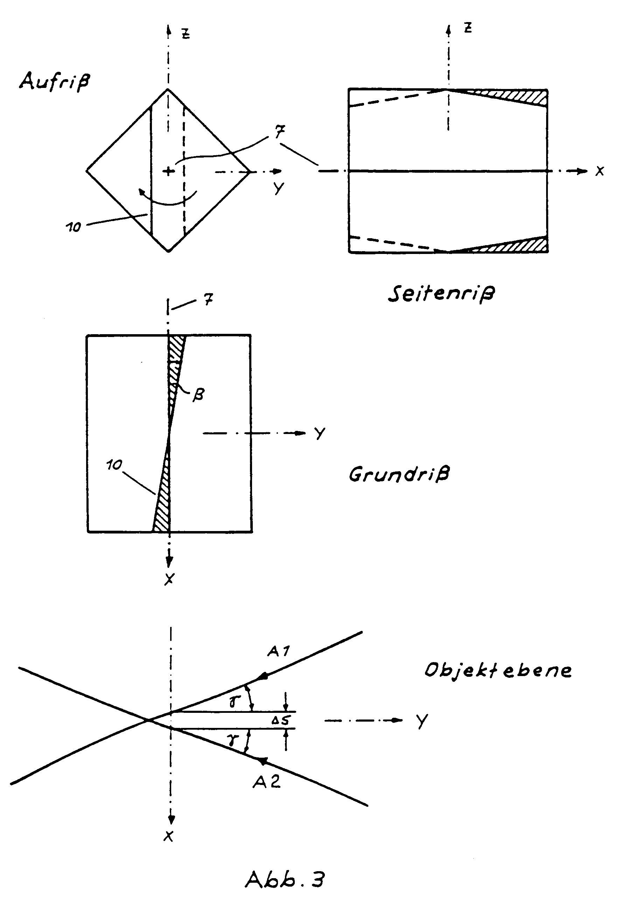

Bei einem zweiteiligen Prisma entsteht damit die in Abb. 3 dargestellte Anordnung. Die Neigung β der Reflexionsfläche (10) erzeugt bei einer vollen Umdrehung des Prismas auf der Objektebene zwei sich kreuzende, schwach gekrümmte, hyperbelähnliche Abtastspuren (A1), (A2). Bei einer gleichzeitigen Vorwärtsbewegung des Abtasters in X-Richtung entsteht zwischen beiden Abtastspuren der Versatz Δs.

Die beiden Reflexionsflächen schneiden sich rechtwinklig, aber ihre Schnittlinie (12) fällt nicht mehr mit der Prismendrehachse (7) zusammen. Eine volle Rotation dieses vierteiligen Abtastprismas erzeugt vier sich kreuzende Abtastspuren (A1), (A2), (A3), (A4).

Die schmalen dreieckförmigen Flächen (schraffiert) zwischen den Schnittlinien der Reflexionsflächen mit den Prismenflächen und den Dachkanten des Abtastprismas müssen abgedeckt sein, da sie sonst unerwünschtes Nebenlicht in den Strahlengang lenken.

## Patentansprüche

1. Gerades Abtastprisma mit quadratischer Grund- und Deckfläche, und einer im Inneren des Prismas befindlichen ebenen Reflexionsfläche (10), die die Grundfläche und die Deckfläche schneidet, und die durch das Zentrum des Prismas verläuft, **dadurch gekennzeichnet**, daß die Reflexionsfläche gegenüber der durch die Grundfläche und Deckfläche laufenden Symmetrieachse (7) um einen vorgegebenen Winkel (β) ungleich Null und 90° geneigt ist und daß sie zwei gegenüberliegende, zur Symmetrieachse parallele Dachkanten des Prismas in der Mitte schneidet.

2. Abtastprisma nach Anspruch 1, **dadurch gekennzeichnet**, daß eine zweite Reflexionsfläche (11) vorhanden ist, die durch das Zentrum des Prismas verläuft und deren Schnittlinien mit der Grundfläche und der Deckfläche rechtwinklig zu den Schnittlinien der ersten Reflexionsfläche (10) mit der Grundfläche und der Deckfläche verlaufen, und daß diese zweite Reflexionsfläche ebenfalls um den Winkel (β) gegenüber der Symmetrieachse (7) geneigt ist.

3. Abtastprisma nach Anspruch 1 und 2, **dadurch gekennzeichnet**, daß die Dreiecksflächen zwischen den Dachkanten des Prismas und den Schnittlinien der Reflexionsflächen mit den Prismenflächen zur Unterdrückung von Nebenlicht abgedeckt werden.

## Claims

1. Straight scanning prism with square ground- and top surface, and with a plane reflection surface (10), which is located inside the prism and which intersects the ground surface and the top surface and which extends through the centre of the prism, **characterised in that** the reflection surface is slanted relative to the axis of symmetry (7), which extends through the ground surface and top surface, by a specified angle (β), which is not equal zero and 90°, and that it centrally intersects two roof edges of the prism which are opposite each other and parallel to the axis of symmetry.

2. Scanning prism according to claim 1, **characterised in that** a second reflection surface (11) is provided, which extends through the centre of the prism and that its intersecting lines with the ground surface and the top surface extend at right angles to the intersecting lines of the first reflection surface (10) with the ground surface and the top surface, and that this second reflection surface is also slanted at an angle (β) relative to the axis of symmetry (7).

3. Scanning prism according to claim 1 and 2, **characterised in that** the triangular surfaces between the roof edges of the prism and the intersecting lines of the reflection surfaces with the prism surfaces are covered so as to suppress secondary light.

## Revendications

1. Prisme droit de balayage comportant des bases inférieure et supérieure carrées et une surface de réflexion (10) plane située à l'intérieur du prisme, surface de réflexion qui coupe les bases inférieure et supérieure et passe par le centre du prisme, caractérisé par le fait que la surface de réflexion est inclinée d'un angle (β) prédéterminé différent de zéro et de 90° par rapport à l'axe de symétrie (7) passant par les bases inférieure et supérieure et qu'elle coupe en leur milieu deux arêtes réfringentes opposées du prisme, parallèles à l'axe de symétrie.

2. Prisme de balayage selon la revendication 1, caractérisé par le fait qu'il comporte une deuxième surface de réflexion (11) qui passe par le centre du prisme et dont les lignes d'intersection avec les bases inférieure et supérieure sont perpendiculaires aux lignes d'intersection de la première surface de réflexion (10) avec les bases inférieure et supérieure et par le fait que la deuxième surface de réflexion est également inclinée de l'angle (β) par rapport à l'axe de symétrie (7).

3. Prisme de balayage selon les revendications 1 et 2, caractérisé par le fait que les surfaces des triangles entre les arêtes réfringentes du prisme et les lignes d'intersection des surfaces de réflexion sont couvertes par les surfaces des prismes afin de limiter la lumière parasite.
